# FASCICULE DE BREVET EUROPEEN

(11) **EP 0 390 017 B1**
(45) Date de publication et mention de la délivrance du brevet: **09.02.1994**
(21) Numéro de dépôt: 90105683.8
(22) Date de dépôt: 26.03.1990
(51) Int. Cl.: H01B 7/00, H01B 7/18, H02G 1/12

(54) **Câble facilement dégainable à la pince par action transversale, et pince pour son dégainage**
Durch Queraktion einer Zange einfach zu entmantelndes Kabel und Zange für dessen Entmantelung
Easily strippable cable by the transverse action of pliers, and pliers for its stripping

(30) Priorité: 29.03.1989 FR 8904073
(43) Date de publication de la demande: 03.10.1990
(73) Titulaire: FILOTEX S.A. dite, 91210 Draveil (FR)
(72) Inventeur: Viaud, André, F-91500 Crosne (FR)
(74) Mandataire: Weinmiller, Jürgen

(56) Documents cités:
- FR-A- 1 459 288
- US-A- 2 743 632

## Description

La présente invention concerne un câble facilement dégainable à la pince par action transversale, ainsi qu'une pince spécialement adaptée pour son dégainage.

Il est nécessaire pour certains types de câbles, notamment ceux utilisés dans des réseaux linéaires à branches latérales pour la desserte d'abonnés, pour des fonctions de signalisation, de surveillance, de transmission d'informations, de sécurité, etc... de pouvoir procéder à de fréquentes modifications de raccordement, soit par déplacement, soit par adjonction de nouveaux abonnés. Les dénudages exécutés sur câbles classiques avec les outils habituels en un lieu quelconque sur câble courant entraînent pratiquement chaque fois des blessures sur les conducteurs. Ces blessures sont génératrices de perturbations sur le réseau installé.

Le document FR-A-1459288 décrit un câble gainé rendu assemblable en nappe à d'autres câbles analogues. A cet effet, la gaine de ces câbles présente deux oreilles latérales délimitant de part et d'autre de chacune d'elles un couple de rainures, dans un plan extérieur à la surface intérieure de la gaine. Des pièces de liaison de deux de ces câbles juxtaposés prennent appui dans les deux couples côte à côte de rainures de l'un et l'autre des deux câbles.

La présente invention a pour but de procurer un câble facilement dégainable, minimisant les risques de blesser ou de couper ses conducteurs, et autorisant des modifications ou des adjonctions rapides de raccordements. Elle a encore pour but de procurer un outil, pince, accroissant encore la sécurité dans le dégainage d'un tel câble.

Le câble dégainable à la pince par action transversale selon l'invention, à conducteurs intérieurs et à gaine les entourant et présentant au moins deux couples de rainures se faisant face et étant pour chaque couple dans un plan extérieur aux conducteurs est caractérisé en ce que le câble comporte aussi des drains intérieurs et en ce que ledit plan des rainures de chaque couple coupe la surface intérieure de ladite gaine.

Il répond en outre de préférence à au moins l'une des caractéristiques suivantes :
- Le profil de sa gaine comporte deux couples de nervures et de rainures longitudinales dans des plans parallèles, de part et d'autre de son axe.
- La gaine munie de ses rainures s'incrit dans un carré.

Les drains sont constitués, soit d'un ou plusieurs conducteurs nus multibrins ou monobrins assemblés en même temps que les conducteurs porteurs des signaux, soit de méplats disposés de manière qu'ils ne soient pas coupés par les plans des couples de rainures longitudinales, soit des deux types de drains simultanément.
- Les plans des couples de rainures longitudinales coupent également son blindage.

La pince de dégainage selon l'invention est caractérisée en ce qu'elle comporte entre ses mâchoires une butée limitant la pénétration du câble entre celles-ci. Ses mâchoires sont de préférence commandées par un système de bras à genouillère.

Il est décrit ci-après, à titre d'exemples et en référence aux figures du dessin annexé, un câble facilement dénudable et une pince de dénudage selon l'invention.
La figure 1 représente la section droite d'un câble blindé à drains formés par des torons.
La figure 2 représente la section droite du câble après l'opération de dénudage.
La figure 3 représente la section droite d'un câble à drains formés par des méplats disposés hors du champ des plans de coupe des mâchoires d'une pince.
La figure 4 représente en élévation une pince de dénudage à butée de limitation de la pénétration du câble et à commande à genouillère.

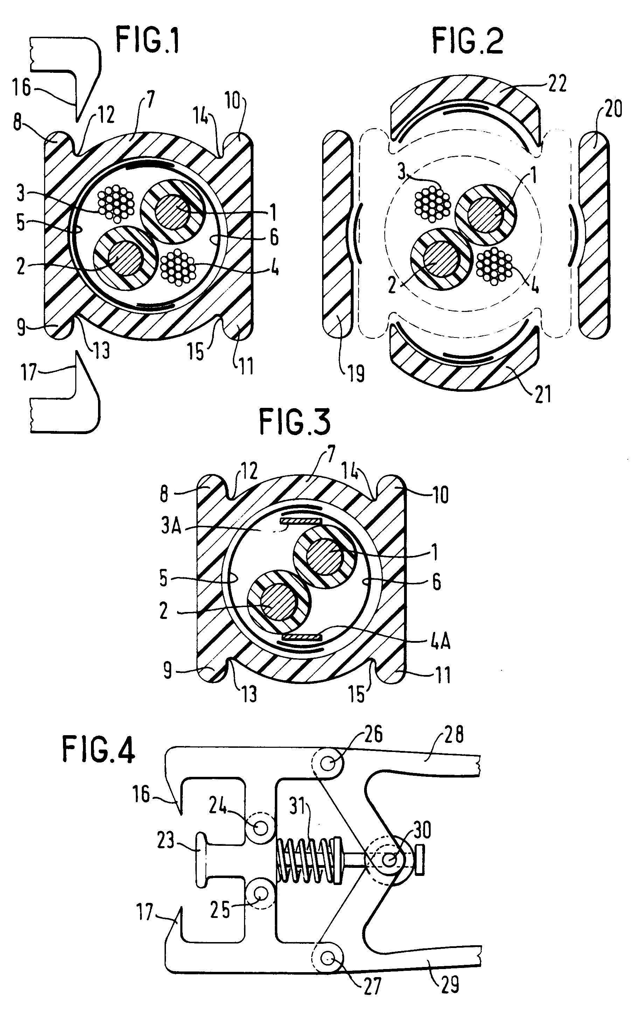

Dans la figure 1, le câble comporte deux conducteurs isolés 1 et 2, deux drains 3 et 4, deux rubans de blindage 5 et 6 et une gaine 7. Celle-ci présente deux couples de nervures longitudinales 8, 9 et 10, 11, délimitant des rainures 12, 13 et 14, 15 pour l'attaque par les mâchoires 16, 17 d'une pince de dénudage. Les plans des rainures coupent la surface interne de la gaine et les blindages.

Après dégainage des deux côtés de câble, il ne subsiste que les conducteurs et les drains du câble, comme représenté en figure 2, la gaine et le blindage étant divisés en quatre éléments 19, 20, 21, 22.

Dans la figure 3, les drains 3A, 4A du câble sont en forme de méplats et sont disposés entre les plans de coupe (ou plus rigoureusement les cylindres de coupe), d'une pince de dégainage, définis par les rainures, de sorte qu'ils ne courent aucun risque d'être endommagés lors du dénudage.

La pince de dénudage représentée en figure 4 comporte entre ses mâchoires 16, 17 une butée 23 limitant la pénétration du câble entre celles-ci, et assurant ainsi que seule la gaine et éventuellement le blindage soient atteints par l'opération de coupe.

La position de la butée est naturellement fixée en fonction de l'épaisseur de la gaine et éventuellement du blindage du câble à dénuder. Les mâchoires 16, 17 pivotent autour d'axes fixes 24, 25. Elles sont reliées par des axes mobiles 26, 27 aux bras de commande 28, 29 pivotant autour de l'axe de genouillère 30, séparé de l'extrémité arrière du ressort 31 par un jeu permettant le recul de la butée sous les efforts de dénudage.

## Revendications

1. Câble dégainable à la pince par action transversale, à conducteurs intérieurs (1, 2) et à gaine les entourant et présentant au moins deux couples de rainures longitudinales (12, 13, 14, 15) se faisant face et étant pour chaque couple dans un plan extérieur aux conducteurs, caractérisé en ce que le câble comporte aussi des drains intérieurs (3, 4) et en ce que ledit plan des rainures (12-13; 14-15) de chaque couple coupe la surface intérieure de ladite gaine (7).

2. Câble selon la revendication 1, caractérisé en ce qu'il comporte deux couples opposés de nervures (8-9; 10-11) délimitant deux couples de rainures et s'étendant dans des plans parallèles aux plans desdits couples de rainures.

3. Câble selon la revendication 2, caractérisé en ce qu'il est de section droite s'inscrivant dans un carre.

4. Câble selon l'une des revendications 1 à 3, comportant un blindage monté autour de l'ensemble desdits conducteurs et drains (3, 4) et recouvert par ladite gaine, caractérisé en ce que le plan des rainures de chaque couple coupe également ledit blindage (5, 6).

5. Pince de dégainage d'un câble selon l'une des revendications 1 à 4, caractérisée en ce qu'elle comporte entre ses mâchoires (16, 17) une butée (23) limitant la pénétration du câble entre celles-ci.

6. Pince selon la revendication 5, caractérisée en ce que ses mâchoires sont commandées par un système de bras (28, 29) à genouillère (30, 31).

## Claims

1. A cable strippable by a transversely-acting pincer, the cable having internal conductors (1,2) and a sheath surrounding them, the sheath having at least two pairs of longtitudinal grooves (12, 13, 14, 15) facing one another, each pair being in a plane outside the conductors, characterized in that the cable also includes internal earthing leads (3, 4) and in that the said plane of the grooves (12-13; 14-15) of each pair intersects the inside surface of the said sheath (7).

2. A cable according to claim 1, characterized in that it includes two opposing pairs of ribs (8-9; 10-11) delimiting two pairs of grooves and lying in planes parallel to said pairs of grooves.

3. A cable according to claim 2, characterized in that its right cross-section can be inscribed in a square.

4. A cable according to any one of claims 1 to 3, including screening mounted around all of said conductors and earthing leads (3, 4), the cable being covered by the said sheath and being characterized in that the plane of the grooves in each pair also intersects the said screening (5, 6).

5. A transversely-acting cable-stripping pincer for a cable according to any one of claims 1 to 4, the pincer being characterized in that it includes an abutment (23) between its jaws (16, 17) for limiting the depth to which the cable penetrates between the jaws.

6. A pincer according to claim 5, characterized in that it jaws are controlled by a system of toggle-action (30, 31) arms (28, 29).

## Patentansprüche

1. Kabel, das durch Quereinwirkung einer Zange entmantelt werden kann, mit Innenleitern (1, 2) und einem sie umgebenden Mantel und mit mindestens zwei Paaren von Längsnuten (12, 13, 14, 15), die sich gegenüberliegen und für jedes Paar in einer Ebene außerhalb der Leiter liegen, dadurch gekennzeichnet, daß das Kabel außerdem innere Drains (3, 4) enthält und daß die Ebene der Nuten (12-13; 14-15) jedes Paars die Innenoberfläche des Mantels (7) schneidet.

2. Kabel nach Anspruch 1, dadurch gekennzeichnet, daß es zwei entgegengesetzte Paare von Rippen (8-9; 10-11) aufweist, die zwei Paare von Längsnuten begrenzen und sich in parallelen Ebenen zu den Ebenen der Nutenpaare erstrecken.

3. Kabel nach Anspruch 2, dadurch gekennzeichnet, daß es einen Querschnitt aufweist, der in ein Viereck paßt.

4. Kabel nach einem der Ansprüche 1 bis 3, mit einer Abschirmung, die um die Einheit der Leiter und Drains (3, 4) angeordnet ist und von dem Mantel umhüllt wird, dadurch gekennzeichnet, daß die Ebene der Nuten jedes Paars auch diese Abschirmung (5, 6) schneidet.

5. Entmantelungszange für ein Kabel nach einem der Ansprüche 1 bis 4, dadurch gekennzeichnet, daß sie zwischen ihren Backen (16, 17) einen Anschlag (23) aufweist, der das Eindringen des Kabels zwischen diese Backen begrenzt.

6. Zange nach Anspruch 5, dadurch gekennzeichnet, daß ihre Backen von einem System von Armen (28, 29) mit Knebelgelenk (30, 31) gesteuert werden.
